# EUROPÄISCHE PATENTSCHRIFT

(11) **EP 0 275 911 B1**
(45) Veröffentlichungstag und Bekanntmachung des Hinweises auf die Patenterteilung: **29.09.1993**
(21) Anmeldenummer: 88100374.3
(22) Anmeldetag: 13.01.1988
(51) Int. Cl.: B23B 31/02

(54) **Einrichtung zum Verbinden zweier im Verbindungsbereich im wesentlichen rotationssymmetrisch gestalteter Bauteile, insbesondere eines Werkzeugkopfes mit einem Werkzeugträger zum Einsatz an Werkzeugmaschinen**
Device for coupling two rotational symmetrical parts, especially a tool head to a tool carrier in machine tools
Dispositif d'accouplement de deux pièces à rotation symétrique par exemple une tête d'outil et un porte-outil dans des machines-outils

(30) Priorität: 14.01.1987 DE 3700841
(43) Veröffentlichungstag der Anmeldung: 27.07.1988
(73) Patentinhaber: JAMANN GmbH, D-56591 Horhausen (DE)
(72) Erfinder: Jamann, Helmut, D-5463 Horhausen (DE)
(74) Vertreter: Hennig, Peter

(56) Entgegenhaltungen:
- DE-A- 2 347 816
- DE-C- 415 343
- FR-A- 2 544 642
- US-A- 4 228 705

## Beschreibung

Die Erfindung betrifft eine Einrichtung zum Verbinden eines Werkzeugkopfes mit einem Werkzeugträger zum Einsatz an Werkzeugmaschinen, die einen Werkzeugträger mit zwei axial zueinander verstellbaren Elementen aufweist, die ferner mit Stellmitteln zum axialen Verstellen der Elemente des Werkzeugträgers relativ zueinander versehen ist, die weiterhin Verriegelungsmittel für den Werkzeugkopf aufweist, welche einerseits einer an dem einen Element des Werkzeugträgers vorgesehenen, schräg zu dessen Achse angeordneten ringförmigen Kegelmantelfläche und andererseits einer an dem anderen Element des Werkzeugträgers vorgesehenen Stützfläche mit einer Selbsthemmung der Verriegelungsmittel ausschließenden Neigung zur ringförmigen Kegelmantelfläche des einen Elementes gegenüberliegen, die weiterhin eine am dem Werkzeugträger zugekehrten Ende des Werkzeugkopfes in diesem vorgesehenen Nut aufweist, welche zusammen mit der ringförmigen Kegelmantelfläche des einen Elementes und der Stützfläche des anderen Elementes des Werkzeugträgers einen die erwähnten Verriegelungsmittel eInschließenden Raum begrenzt und in die die Verriegelungsmittel unter in axialer Richtung erfolgender Relativbewegung der beiden Elemente des Werkzeugträgers bewegbar sind zum axialen Anpressen von Werkzeugkopf und Werkzeugträger aneinander, und die schließlich mit einer jeweils als durchgehend ringförmig umlaufende Fläche ausgebildeten Kegelmantelfläche des einen Elementes und Stützfläche des anderen Elementes versehen ist. Eine solche Einrichtung ist aus FR-A- 2 544 642 bekannt.

Eine weitere bekannte Einrichtung, die einige der vorstehend genannten Merkmale der Erfindung aufweist, wird seit einiger Zeit auf dem Inlandsmarkt im Zusammenhang mit Werkzeugsystemen für den Einsatz an Werkzeugmaschinen, insbesondere umfangreicheren Bearbeitungszentren, angeboten. Bei dieser bekannten Einrichtung besteht das eine Bauteil aus zwei Elementen, nämlich einem außenliegenden, teilweise hülsenförmigen Körper und einer innerhalb der axialen Bohrung des hülsenförmigen Körpers befindlichen Anzugstange. Der außenliegende, hülsenförmige Körper bildet zusammen mit der Anzugstange einen Werkzeugträger, an den ein Werkzeugkopf kuppelbar ist. Hierzu ist die erwähnte Anzugstange mittels eines schräg zur Achse von Werkzeugträger und Werkzeugkopf im hülsenförmigen Körper angebrachten Gewindestiftes in axialer Richtung relativ zum hülsenförmigen Körper verstellbar. Die Anzugstange weist eine kegelstumpfförmige Fläche auf, die als Steuerfläche für Verriegelungsmittel, nämlich für einige über den Umfang dieser Steuerfläche verteilt angeordnete, im übrigen im hülsenförmigen Körper in gesonderten Bohrungen geführte Bolzen dient. Diese Bolzen greifen in der einen Endstellung in eine Nut, die am dem hülsenförmige Körper bzw. der Anzugstange zugekehrten Ende des Werkzeugkopfes in dessen innenliegender, den Bolzen zugekehrter Wandung vorgesehen ist. Durch entsprechende Einstellung des erwähnten Gewindestiftes als Stellmittel für die Anzugstange gegenüber dem hülsenförmigen Körper kann hiermit der Werkzeugkopf mit einer ringförmigen Paßfläche an eine korrespondierende Paßfläche des hülsenförmigen Körpers gepreßt werden.- Im übrigen ist bei dieser bekannten Einrichtung zwischen hülsenförmigem Körper des Werkzeugträgers und Werkzeugkopf noch ein am hülsenförmigen Körper befestigter, in eine Ausnehmung am Werkzeugkopf greifender Mitnehmer vorgesehen, so daß - zusätzlich zum durch Pressung zwischen Werkzeugkopf und hülsenförmigem Körper erzeugten Kraftschluß durch entsprechende Einstellung des erwähnten Gewindestiftes - noch ein Formschluß besteht, der sogenanntes Durchrutschen des Werkzeugkopfes gegenüber dem hülsenförmigen Körper verhindert. Außerdem bewirkt dieser Mitnehmer eine vorbestimmte Positionierung zwischen Werkzeugkopf und Werkzeugträger.

Nachteilig bei der bekannten Einrichtung ist, daß bei dieser eine Mehrzahl von Bolzen notwendig ist, die in einer entsprechenden Anzahl von Bohrungen im hülsenförmigen Körper des Werkzeugträgers geführt sind und die einerseits mit der erwähnten Steuerfläche der Anzugstange und andererseits mit einer Fläche bzw. einem Flächenanteil der erwähnten Nut in Kontakt stehen bzw. in Kontakt bringbar sind. Die Anordnung mehrerer Bolzen und für die Bolzen jeweils gesondert vorgesehener, präzise gearbeiteter Bohrungen als Führung für die Bolzen ist technisch aufwendig und in der Herstellung mit hohen Kosten verbunden. Dennoch kann mit dieser Konstruktion nur mehr oder weniger punktförmig die gewünschte Anpreßkraft von der Anzugstange des Werkzeugträgers auf den betreffenden Teilbereich der erwähnten Nut des Werkzeugkopfes ausgeübt werden. Die mehr oder weniger punktförmige Übertragung der Anpreßkräfte von der Anzugstange des Werkzeugträgers auf Bereiche der Nut des Werkzeugkopfes und in gewissem Maß auch von der erwähnten Paßfläche des Werkzeugkopfes auf die erwähnte, gegenüberliegende Paßfläche des hülsenförmigen Körpers führt dazu, daß sowohl die Steuerfläche der Anzugstange als auch der betreffende Flächenbereich der Nut im Werkzeugkopf nach einiger Zeit mehr oder weniger beschädigt und deformiert werden kann, und zwar in einem Ausmaß, welches ein weiteres problemfreies Funktionieren dieser Art von Kupplung stört oder ausschließt.

Ein weiterer Nachteil der bekannten Einrichtung besteht im übrigen darin, daß die erwähnten Bolzen beim Lösen des Gewindestiftes - also Entfernen der Steuerfläche der Anzugstange von der gegenüberliegenden, erwähnten Fläche der Nut im Werkzeugkopf - nicht immer oder nur teilweise der Bewegung der Steuerfläche der Anzugstange folgen, so daß ein unbehindertes Entnehmen des Werkzeugkopfes vom Werkzeugträger nicht immer gewährleistet ist.

Eine Einrichtung zum Verbinden eines Werkzeugkopfes mit einem Werkzeugträger zum Einsatz an Werkzeugmaschinen, die ebenfalls schon einige der einleitend erwähnten Merkmale der vorliegenden Erfindung aufweist, ist in der GB - A- 2 154 479 beschrieben. Im Fall dieser Einrichtung werden die von einer Kegelmantelfläche einer Anzugstange ausgehenden Kräfte zur Befestigung eines Werkzeugkopfes am Werkzeugträger über Kugeln von der Anzugstange des Werkzeugträgers auf eine ringförmige Fläche einer innenliegenden Nut des Werkzeugkopfes übertragen. Die die Anpreßkräfte übertragenden Kugeln sind dabei auf einem Kreisring angeordnet.- Wegen der im wesentlichen punktförmigen Übertragung der Anpreßkräfte zwischen Anzugstange des Werkzeugträgers und Werkzeugkopf ist diese Lösung im Hinblick auf die bestehende Gefahr der Beschädigung und/oder Deformierung der miteinander in Kontakt tretenden Bereiche der erwähnten Elemente noch größer als im Fall der zuvor erwähnten, auf dem Inlandsmarkt angebotenen vorbekannten Lösung. Unabhängig davon besteht der Werkzeugträger im Fall der Einrichtung nach der GB- A- 2 154 479 aus drei - und nicht wie beim Gegenstand der vorliegenden Anmeldung aus zwei - axial zueinander verstellbaren Elementen, nämlich einem Grundkörper, einem Anzugbolzen und einer gegen Federkraft verschiebbaren Haltebüchse für die genannten Kugeln.

Darüber hinaus ist es aus der US- A - 4 228 705 bekannt, als Verriegelungsmittel zum Verbinden zweier im Verbindungsbereich im wesentlichen rotationssymmetrisch gestalteter Bauteile einen in Umfangsrichtung einteiligen, in radialer Richtung federnd ausgebildeten ringförmigen Körper mit kreisförmigem Querschnitt zu verwenden.

### Aufgabe

Der vorliegenden Erfindung liegt die Aufgabe zugrunde, eine Einrichtung der eingangs genannten Gattung insoweit zu verbessern, daß einerseits eine möglichst gleichmäßige Übertragung der für die Verbindung von Werkzeugkopf mit Werkzeugträger notwendigen Kräfte vom Werkzeugträger auf den Werkzeugkopf erfolgt unter Ausschluß von Beschädigungen und/oder Deformierungen der miteinander in Kontakt tretenden Elemente und daß andererseits sichergestellt ist, daß beim Lösen des Stellmittels (z. B. Stellschraube) am Werkzeugträger der jeweils verwendete Werkzeugkopf problemlos vom Werkzeugträger abgenommen werden kann. Außerdem soll der Aufwand zur Herstellung einer derartigen Kupplungseinrichtung so gering wie möglich sein.

### Lösung

Die vorstehend umrissene Aufgabe wird durch die Merkmale des Anspruches 1 erfindungsgemäß gelöst.

### Vorteile

Die so verbesserte Einrichtung nach Maßgabe des Anspruchs 1 führt zu einer Lösung für eine Kupplungs- oder Verbindungseinrichtung von Werkzeugträger und Werkzeugkopf zur Anwendung bei Werkzeugmaschinen, die bei der Möglichkeit der Übertragung relativ hoher Kräfte eine sporadische Deformation oder Zerstörung von Teilen der miteinander in Kontakt tretenden Bauelemente vermeidet und die dennoch mit relativ geringem Aufwand herzustellen ist. Im Hinblick auf die Gestaltung des ringförmigen Körpers mit erfindungsgemäß polygonartigem Querschnitt sind selbstverständlich die dem ringförmigen Körper jeweils gegenüberliegenden Flächenbereiche der Nut des Werkzeugkopfes sowie der beiden Elemente des Werkzeugträgers hieran angepaßt. - Außerdem hat die Erfindung den Vorteil, daß sich infolge der besonderen Ausführung der Verriegelungsmittel als einteiliger, ringförmiger Körper in Verbindung mit zugeordneten Teilflächen des einen und/oder des anderen Elements des Werkzeugträgers keine Probleme beim Wechsel des Werkzeugkopfes wie im Fall der bekannten Einrichtung ergeben können. Weiter wird bei der Verbindung eines Werkzeugkopfes mit dem Werkzeugträger ein einwandfreies Hineingleiten des ringförmigen Körpers in die erwähnte Nut sichergestellt. Dabei ist selbstverständlich die der erwähnten ringförmigen Fläche der Nut benachbarte Stützfläche des Werkzeugträgers so zu der erwähnten ringförmigen Fläche der Nut angeordnet, daß ein problemloses Hinübergleiten des federnden , ringförmigen Körpers von der Stützfläche in den Bereich der Nut möglich ist.

Im Zusammenhang mit der Ausführung des Erfindungsgedankens nach Anspruch 1 kann sich die erwähnte Nut nicht nur im Bereich einer innenliegenden Bohrung des Werkzeugkopfes, sondern auch im Bereich der äußeren Mantelfläche eines Zapfens des Werkzeugkopfes befinden.

Zum Zweck einer einwandfreien und vollständigen Übertragung der gewünschten Anpreßkräfte zwischen dem Werkzeugträger und dem Werkzeugkopf ist es wesentlich, daß in Verbindungsstellung von Werkzeugkopf und Werkzeugträger der federnde, ringförmige Körper außer an einer Fläche der erwähnten Nut nur an einer Steuerfläche des Anzugsbolzens bzw. einer Überwurfmutter des Werkzeugträgers anliegt.

Damit wird sichergestellt, daß der die Verbindungskräfte zwischen Werkzeugträger und Werkzeugkopf übertragende ringförmige Körper ausschließlich einerseits am Werkzeugkopf und andererseits an der ringförmigen Kegelmantelfläche des einen Elements des Werkzeugrägers anliegt, so daß der ringförmige Körper keinen Kontakt mehr mit der am anderen Element des Werkzeugträgers vorgesehenen Stützfläche hat und damit definierte und bestmögliche Kraftübertragung und dementsprechender Reibschluß zwischen Werzeugträger und Werkzeugkopf besteht.

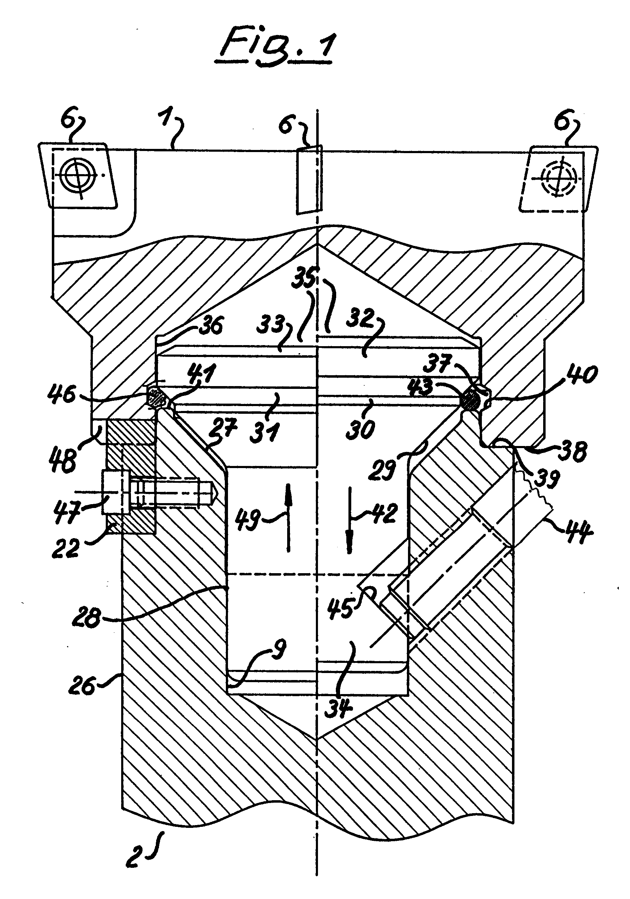

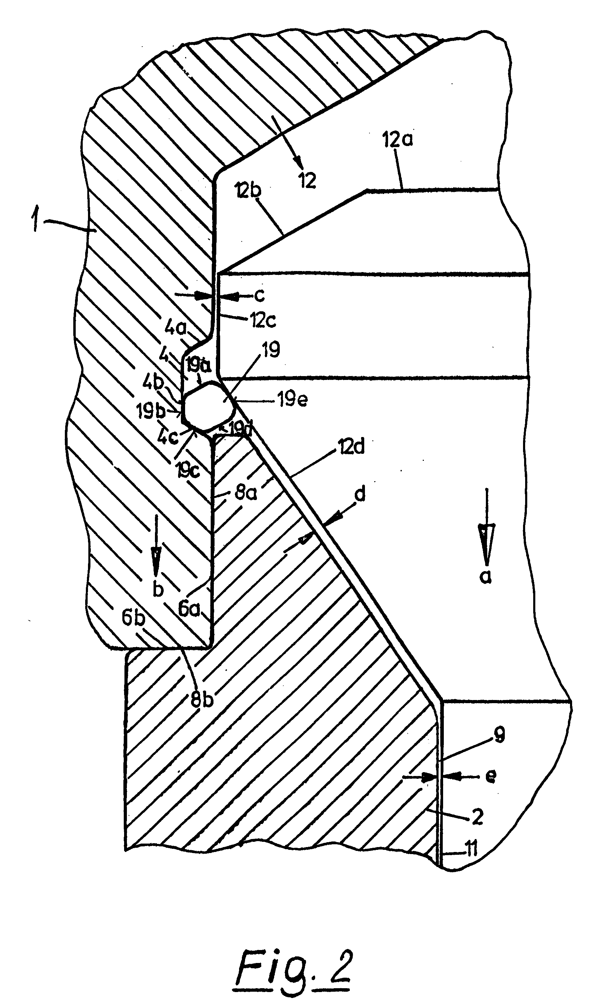

Anhand der Figuren 1 und 2 der Zeichnung wird die Erfindung im folgenden an mehreren Ausführungsbeispielen bzw. Ausführungsformen erläutert.

Dabei zeigen:
- Figur 1: eine erfindungsgemäße Einrichtung in einer Ansicht im Schnitt, in der jedoch nur der linke Teil der Zeichnung den erfindungsgemäß verwendeten, polygonartigen Querschnitt aufweisenden ringförmigen Körper zeigt, während der rechte Teil der Zeichnung aus Gründen vereinfachter zeichnerischer Darstellung lediglich einen - an sich bekannten - als Verriegelungsmittel eingesetzten ringförmigen Körper mit kreisförmigem Querschnitt zeigt; und
- Figur 2: ein weiteres Ausführungsbeispiel einer erfindungsgemäßen Einrichtung teilweise und im Schnitt sowie in größerem Maßstab.

Figur 1 zeigt die erfindungsgemäße Einrichtung in einer ersten Ausführungsform und insbesondere für ein automatisch arbeitendes, mit einer größeren Anzahl von im Zugriff stehenden Werkzeugen bzw. Werkzeugköpfen ausgestattetes Bearbeitungszentrum. Damit Werkzeugmaschinen oder Bearbeitungszentren mit einem derartigen Werkzeugsystem rationell arbeiten können, ist ein möglichst schneller und problemloser Werkzeugwechsel unabdingbar. Diesen Bedingungen entspricht die Einrichtung nach Figur 1.

Figur 1 zeigt ein aus einem Werkzeugkopf 1 und einem Werkzeugträger 2 bestehendes Werkzeugsystem, bei dem das oder die Werkzeuge grundsätzlich feststehend oder angetrieben sein können ; im vorliegenden Fall sind Werkzeugträger und Werkzeugkopf mit den als Schneidplatten 6 ausgebildeten Werkzeugen angetrieben.

Der Werkzeugträger 2 besteht aus zwei Elementen, und zwar aus einem teilweise hülsenförmigen, rotationssymmetrischen Grundkörper 26, in dem sich ein Anzugsbolzen 28 in axialer Richtung verstellbar führt. Der Grundkörper 26 weist an seinem dem Werkzeugkopf 1 zugekehrten Ende eine zylindrische Bohrung 9 auf, die sich zum freien Ende hin in einen konischen Bereich 27 erweitert. Mit einem mit 34 bezeichneten, zylindrischen Bolzenteil führt sich der Anzugsbolzen 28 in axialer Richtung in der Bohrung 9. Im konischen Bereich 27 der Bohrung 9 des Grundkörpers 26 läuft der Anzugsbolzen 28 in eine kegelstumpfförmige Erweiterung 29 aus, an die sich ein zylindrischer Absatz 30 anschließt. Auf den Absatz 30 folgt eine weitere, mit 31 bezeichnete ringförmige Kegelmantelfläche, an die eine weitere ringförmige, zylindrische Fläche 32 anschließt. In Richtung auf den Werkzeugkopf 1 zu folgt auf die Fläche 32 schließlich noch eine ringförmige Kegelstumpffläche 33.

Das teilweise kegelstumpfförmig erweiterte, mit 35 bezeichnete eine Ende des Anzugsbolzens 28 befindet sich im Raum einer im Werkzeugkopf 1 auf der den Schneidplatten 6 gegenüberliegenden Seite des Werkzeugkopfes befindlichen Bohrung 36. Die im wesentlichen zylindrisch ausgeführte Bohrung 36 ist durch eine ringförmige Nut 37 mit etwa trapezförmigem Querschnitt unterbrochen.

Bei aneinanderliegenden Paßflächen 38 und 39 von Werkzeugkopf 1 bzw. Grundkörper 26 des Werkzeugträgers 2 befindet sich die Nut 37 des Werkzeugkopfes 1, insbesondere die Teilfläche 40 der Nut 37, derart benachbart zu einer mit 41 bezeichneten, kreisringförmigen Stützfläche, daß durch Verstellen des Anzugsbolzens 28 in Richtung des Pfeils 42 ein im Raum zwischen der Stützfläche 41, der als Steuerfläche dienenden ringförmigen Kegelfläche 31 und der gesamten Fläche der Nut 37 befindlicher, mit 43 bezeichneter federnder ringförmiger Körper aus der in der rechten Hälfte der Darstellung in Figur 1 gezeigten Position in die in der linken Hälfte der Darstellung gezeigte Position gedrückt wird. Die Anordnung der Teilfläche 40 der Nut 37 zur Stützfläche 41 des Grundkörpers 26 ist - bei aneinanderliegenden Paßflächen 38 und 39 - dabei so gewählt, daß der federnde, ringförmige Körper 43 bei Einnahme der in der linken Hälfte der Darstellung nach Figur 1 gezeigten Position keinen Kontakt mehr mit der Stützfläche 41 des Grundkörpers 26 hat. Dementsprechend werden die von einer an sich bekannten Stellschraube 44 über eine Stellfläche 45 des Anzugsbolzens 28 ausgeübten Kräfte über den ringförmigen Körper 43 ausschließlich auf den Werkzeugkopf 1 übertragen. Damit wird ein sicherer Sitz des Werkzeugkopfes am Grundkörpers 26 des Werkzeugträgers 2 sichergestellt. - Anstelle der üblicherweise verwendeten Stellschraube 44 können selbstverständlich mehrere solcher Stellschrauben verwendet werden oder aber auch andere Stellmittel mit pneumatischem, hydraulischem oder elektromagnetischem Antrieb.

Anstelle des an sich bekannten und im rechten Teil der Darstellung in Figur 1 nur aus Gründen der zeichnerischen Vereinfachung mit kreisförmigem Querschnitt dargestellten, ringförmigen Körpers 43 wird erfindungsgemäß ein ringförmiger Körper mit davon abweichendem Querschnitt, nämlich mit polygonartigem Querschnitt verwendet, wie er im linken Teil der Darstellung der Figur 1 gezeigt und dort mit 46 bezeichnet ist. Die polygonartige Ausgestaltung des Querschnitts des federnden, ringförmigen Körpers 46 bietet bei entsprechender Gestaltung im Hinblick auf den Verlauf und die Lage der Stützfläche 41 am Grundkörper 26 des Werkzeugträgers 2, der als Steuerfläche dienenden, ringförmigen Kegelmantelfläche 31 am Anzugsbolzen und der entsprechenden Teilflächen der Nut 37 den Vorteil, daß jeweils größere Flächenbereiche des ringförmigen Körpers mit dem Werkzeugkopf 1 und dem einem bzw. anderen Element des Werkzeugträgers 2 in Kontakt bringbar sind und somit größere Kräfte ohne irgendeine Beschädigung oder Deformation von Oberflächenbereichen übertragen werden können.

Figur 1 zeigt im übrigen noch einen Mitnehmer 22, der mittels eines Schraubenbolzens 47 mit dem Grundkörper 26 fest verbunden ist und dessen eines Ende in eine Aussparung 48 am Werkzeugkopf 1 reicht. Hiermit wird erreicht, daß einerseits ein sogenanntes Durchrutschen des Werkzeugkopfes 1 gegenüber dem Werkzeugträger 2 bzw. dessen Grundkörper 26 beim Auftreten hoher Umfangskräfte mit Sicherheit verhindert wird, und daß andererseits ein gegenüber dem Grundkörper 26 vorherbestimmtes, positioniertes Aufstecken und Verbinden des Werkzeugkopfes 1 mit dem Werkzeugträger 2 ermöglicht wird.

Beim Verstellen bzw. Bewegen des Anzugsbolzens 28 in Richtung des Pfeils 49 - also aus der Verriegelungsstellung für einen Werkzeugkopf 1 in die Entriegelungsstellung - wird im Verlauf der Bewegung des Anzugsbolzens 28 in Richtung des Pfeils 49 der ringförmige Körper 43 bzw. 46 an der ringförmigen Kegelmantelfläche 31 unter Zusammenziehen des ringförmigen Körpers soweit entlanggleiten, bis er an dem zylindrischen Absatz 30 zur Anlage kommt und dort gehalten wird. Infolge dieser definierten Halteposition des ringförmigen Körpers im Entriegelungszustand des Werzeugsystems bzw. der erfindungsgemäßen Einrichtung kann der Werkzeugkopf 1 stets problemlos vom Werkzeugträger 2 entnommen werden. Ein nicht vorhersehbares Verklemmen oder Verkeilen von einem oder mehreren, in gesonderten Führungen geführten Bolzen, wie im Fall einer der vorbekannten Einrichtungen, ist bei der erfindungsgemäßen Einrichtung ausgeschlossen.

Wie eingangs erwähnt, können im Fall der erfindungsgemäßen Einrichtung wesentlich größere Kräfte als im Fall der vorbekannten Einrichtungen im Kupplungsbereich der beiden Bauteile übertragen werden, ohne daß dies die Funktionssicherheit beinträchtigen würde, und ohne daß Beschädigungen oder Zerstörungen von Bereichen der Bauelemente zu befürchten wären. Die Einrichtung nach der Erfindung ist technisch einfach und erfordert nur verhältnismäßig geringen Herstellungsaufwand.

Figur 2 zeigt in einem anderen Ausführungsbeispiel der Erfindung einen Längsschnitt durch den Werkzeugkopf 1 und den Werkzeugträger 2 und einen zu einem Polygon verformten Sprengring 19 mit fünf Seiten 19 a-e in Verriegelungsstellung b, der in idealer Weise mit seinen beiden Seiten 19 b, 19 c den Nutflächen 4 b, 4 c der Nut 4 des Werkzeugkopfes 1 und mit einer fünften Seite 19 e der unteren Kegelstumpffläche 12 d des Kegelkopfes 12 anliegt, und zeigt auch die Paßzentrierung, die durch die Pfeile a und b sowie durch die Pfeilpaare c - e gekennzeichnet ist. Da bei dieser Ausführungsform der Sprengring 19 mit seinen Seiten 19 b, 19 c und 19 e flächenhaften Kontakt mit den zuvor beschriebenen Flächen 4 b, 4 c und 12 d hat, ist diese Ausbildung des Sprengringes 19 günstiger als eine runde Form, die nur linienhaften Kontakt erzeugt. Leider ist diese als Idealform anzusehende Sprengringausbildung wesentlich aufwendiger in der Fertigung und entsprechend kostenungünstiger, dennoch von Vorteil, wenn Werkstücke bei größeren Vibrationen zu bearbeiten sind.

Anstelle der in Fig. 1 dargestellten Lösung mittels Grundkörper und Anzugsbolzen, kann auch eine Lösung mittels einer Überwurfmutter angewendet werden, die dann mit einem entsprechenden Gewinde auf dem Werkzeugträger korrespondiert. Im Fall dieser Lösung befindet sich die den ringförmigen Körper aufnehmende Nut am Werkzeugkopf.

## Patentansprüche

1. Einrichtung für den Einsatz an Werkzeugmaschinen zum Verbinden eines Werkzeugkopfes (1) mit einem Werkzeugträger (2) und zu deren Lösen voneinander, welche im Verbindungsbereich im wesentlichen rotationssymmetrisch gestaltet sind, mit einem Werkzeugträger (2), der einen Grundkörper (26) und ein axial zum Grundkörper verstellbares Anzugselement (28) aufweist, von denen das Anzugselement (28) eine durchgehend umlaufende kegelstumpfförmige Steuerfläche (31) für am Grundkörper (26) geführte Verriegelungsmittel hat, die in Verbindungsstellung von Werkzeugkopf (1) und Werkzeugträger (2) zum Zweck des Anpressens der in einer Radialebene liegenden Paßflächen (39 bzw. 38) von Werkzeugkopf (1) und Werkzeugträger (2) aeinander in eine Nut (4, 37) des Werkzeugkopfes (1) greifen die mindestens zwei Teilflächen (4b, 4c) aufweist, die von einer kegelstumpfförmigen, ersten Teilfläche (4c) ausgehend und mit einem gegenüber einer Stützfläche (41) des anderen Elementes (Grundkörper 26) des Werkzeugträgers (2) unter einem Winkel von etwa 135° bis 175°, vorzugsweise etwa 165°, ansteigenden Winkel in eine etwa zylindermantelförmige, zweite Teilfläche (4b) übergehen , wobei die Stützfläche (41) zur Steuerfläche (31) derart geneigt ist, daß eine Selbsthemmung ausgeschloßen ist, und mit Stellmitteln (44) zum axialen Verstellen des Grundkörpers (26) und Anzugselementes (28) relativ zueinander, wobei die Verriegelungsmittel aus einem in Umfangsrichtung einteiligen, nach Art eines Sprengringes in radialer Richtung federnd ausgebildeteten ringförmigen Körper (46) mit einem einerseits an die kegelstumpfförmige Steuerfläche (31) des Anzugselements (28) und andererseits an die mit dem ringförmigen Körper (46) korrespondierenden Teilflächen (4b, 4c) der Nut (4, 37) angepaßten, polygonartigen Querschnitt bestehen, der in Lösestellung von Werkzeugkopf (1) und Werkzeugträger (2) unter Eigenspannung am Anzugselement (28) des Werkzeugträgers (2) anliegt und der in Verbindungsstellung von Werkzeugkopf (1) und Werkzeugträger (2) zum Zweck einer einwandfreien und vollständigen Übertragung der gewünschten Anpreßkräfte zwischen Werkzeugkopf (1) und Werkzeugträger (2) nur an den Teilflächen (4b, 4c) der Nut (4, 37) des Werkzeugkopfes (1) und an der Steuerfläche (31) des Anzugselements (28) des Werkzeugträgers (2) liegt.

2. Einrichtung nach Anspruch 1, dadurch gekennzeichnet, daß der Grundkörper aus einem hülsenförmigen Grundkörper (26) und das Anzugselement aus einem in einer Bohrung (9) des Grundkörpers (26) geführten Anzugsbolzen (28) bestehen, an dessen Kegelmantelfläche (31) der Sprengring (46) anliegt.

3. Einrichtung nach Anspruch 1, dadurch gekennzeichnet, daß das Anzugselement aus einer Überwurfmutter besteht.

## Claims

1. Device for use on machine tools for connecting a tool head (1) to a tool carrier (2) and for disconnecting said head and said carrier, which in the connection region have a substantially rotationally symmetrical configuration, said device comprising a tool carrier (2) consisting of a main body (26) and a tightening member (28) which is axially adjustable relative to the main body, said tightening member (28) having a frustoconical control surface (31), extending continuously around it, for locking means which are guided on the main body (26) and which, in the position in which the tool head (1) and tool carrier (2) are connected, engage in a groove (4, 37) in the tool head (1) in order to press against one an-other the fitting surfaces (39 and 38 respectively), lying in a radial plane, of the tool head (1) and tool carrier (2), said groove having at least two part surfaces (4b, 4c) which, starting from a frustoconical first part surface (4c) and with an angle rising relative to a support surface (41) of the other member (main body 26) of the tool carrier (2) at an angle of about 135° to 175°, preferably about 165°, merge into a second part surface (4b) approximately in the form of a cylindrical peripheral surface, said support surface (41) being inclined relative to the control surface (31) such that self-locking is impossible; and comprising adjusting means (44) for axial adjustment of the main body (26) and tightening member (28) relative to one another; the locking means consisting of an annular body (46) which is in one piece in the peripheral direction and is constructed with resiliency in the radial direction in the manner of a circlip, said body having a polygonal cross-section adapted on the one hand to the frustoconical control surface (31) of the tightening member (28) and on the other hand to the part surfaces (4b, 4c) of the groove (4, 37) which correspond to the annular body (46), and lying under internal stress against the tightening member (28) of the tool carrier (2) in the position in which the tool head (1) and the tool carrier (2) are disconnected and, in the position in which the tool head (1) and the tool carrier (2) are connected, lying only against the part surfaces (4b, 4c) of the groove (4, 37) in the tool head (1) and against the control surface (31) of the tightening member (28) of the tool carrier (2) for the purpose of faultless and complete transmission of the desired pressing forces between the tool head (1) and the tool carrier (2).

2. Device according to Claim 1, characterised in that the main body consists of a sleeve-shaped main body (26) and the tightening member consists of a tightening pin (28) which is guided in a bore (9) in the main body (26) and against the conical peripheral surface (31) of which the circlip (46) lies.

3. Device according to Claim 1, characterised in that the tightening member consists of a cap nut.

## Revendications

1. Dispositif destiné a être utilisé dans des machines-outils pour l'assemblage d'une tête d'outil (1) et d'un porte-outil (2) qui ont essentiellement une forme à symétrie de révolution dans la région d'assemblage, et pour les détacher l'un de l'autre, comprenant un porte-outil (2) qui comporte un corps de base (26) et un élément de traction (28) déplaçable axialement par rapport au corps de base, parmi lesquels l'élément de traction (28) présente une surface de commande tronconique (31) s'étendant sur toute sa circonférence pour des moyens de verrouillage qui sont guidés sur le corps de base (26) et qui, dans la position d'assemblage de la tête d'outil (1) et du porte-outil (2), dans le but de presser l'une contre l'autre les surfaces de contact (38, 39) de la tête d'outil (1) et du porte-outil (2) situées dans un plan radial, s'engagent dans une gorge (4, 37) de la tête d'outil (1) qui présente au moins deux portions de surface (4b, 4c) qui, partant d'une première portion de surface tronconique (4c) et montant en formant un angle d'environ 135° a 175°, de préférence d'environ 165°, par rapport a une surface d'appui (41) de l'autre élément (corps de base 26) du porte-outil (2), se transforment en une deuxième portion de surface (4b) à peu prés cylindrique, la surface d'appui (41) étant inclinée, par rapport a la surface de commande (31), de sorte qu'un autoblocage soit exclu, et comprenant des moyens de serrage (44) pour le déplacement axial du corps de base (26) et de l'élément de traction (28) l'un par rapport a l'autre, les moyens de verrouillage étant constitués par un corps annulaire (46) d'une seule pièce, réalisé a la manière d'un anneau à ressort élastique en direction radiale, présentant une section polygonale adaptée d'un côté a la surface de commande tronconique (31) de l'élément de traction (28) et, de l'autre côté, aux portions de surface (4b, 4c) de la gorge (4, 37) qui correspondent au corps annulaire (46), lequel corps annulaire s'applique, sous l'effet de sa propre tension, sur l'élément de traction (28) du porte-outil (2) lorsque la tête d'outil (1) et le porte-outil (2) sont en position détachée, tandis que, dans la position d'assemblage de la tête d'outil (1) et du porte-outil (2), en vue d'une transmission impeccable et complète des forces de serrage désirées entre la tête d'outil (1) et le porte-outil (2), il ne s'applique que sur les portions de surface (4b, 4c) de la gorge (4, 37) de la tête d'outil (1) et sur la surface de commande (31) de l'élément de traction (28) du porte-outil (2).

2. Dispositif selon la revendication 1, caractérisé en ce que le corps de base est constitué par un corps de base en forme de douille (26) et l'élément de traction est constitué par un embout de tirage (28) qui est guidé dans une forure (9) du corps de base (26) et sur la surface conique (31) duquel s'applique l'anneau a ressort (46).

3. Dispositif selon la revendication 1, caractérisé en ce que l'élément de traction est constitué par un écrou d'accouplement.
